Europäisches Patentamt

(19) European Patent Office

Office européen des brevets

(11) Numéro de publication : **0 211 469**
**B1**

(12) FASCICULE DE BREVET EUROPÉEN

(45) Date de publication du fascicule du brevet :
02.11.89

(51) Int. Cl.⁴ : **H 04 J 15/00**, G 02 B   6/34

(21) Numéro de dépôt : **86201530.2**

(22) Date de dépôt : **05.12.83**

(60) Numéro de publication de la demande initiale en
application de l'article 76 CBE : **0112234**

(54) **Composant optique à fonction partagée pour télétransmissions.**

(30) Priorité : 08.12.82 FR 8220547

(43) Date de publication de la demande :
25.02.87 Bulletin 87/09

(45) Mention de la délivrance du brevet :
02.11.89 Bulletin 89/44

(84) Etats contractants désignés :
AT BE CH DE FR GB IT LI LU NL SE

(56) Documents cités :
EP--A-- 0 037 787
WO--A--82 /016 31
ELECTRONICS LETTERS, vol. 16, no. 3, 31st January
1980, pages 106-108, Londres, GB; R. WATANABE et
al.: "Optical demultiplexer using concave grating in
0.7-0.9 mum wavelength region"
PATENTS ABSTRACTS OF JAPAN, vol. 6, no. 255 (P-
162)[1133], 14décembre 1982; & JP-A-57 151 911
(TAKUMI TOMIJIMA) 20-09-1982
ELECTRO-OPTICAL SYSTEMS DESIGN, vol. 13, no.
11, November 1981, pages 25-45, Chigago, Illlnois,
US; A.R. TEBO et al.: "Fiber-optic couplers: Directional and otherwise"

(73) Titulaire : INSTRUMENTS S.A.
25, avenue de l'Opéra
F-75001 Paris (FR)

(72) Inventeur : Laude, Jean-Pierre
3 rue des Graveriots
F-91690 St Cyr La Rivière (FR)

(74) Mandataire : Phélip, Bruno et al
c/o Cabinet Harlé & Phélip 21, rue de La Rochefoucauld
F-75009 Paris (FR)

## Description

La présente invention concerne un composant optique à fonction partagée pour télétransmissions optiques, plus particulièrement destiné au mélange ou à la séparation (opération en tant que multiplexeur ou démultiplexeur) de signaux optiques dans des systèmes de télétransmission ou télédistribution d'informations par fibres optiques.

Les importants développements, réalisés ou en projet, de télétransmission par voie optique amènent à connecter chaque usager à un centre d'émission ou de relais par l'intermédiaire de fibres optiques de transmission munies à chacune de leurs extrémités d'un composant optique destiné à ralier l'émetteur de lumière modulée à la fibre pour y faire pénétrer la lumière, ou bien à l'autre extrémité à recueillir la lumière pour la diriger vers un détecteur qui décodera le signal optique pour le transformer en un signal électrique ou électronique utilisable dans un récepteur usuel. Pour des raisons économiques, on cherche le plus souvent à faire passer simultanément plusieurs signaux dans une même fibre, ce qui oblige à un multiplexage en amont et un démultiplexage en aval.

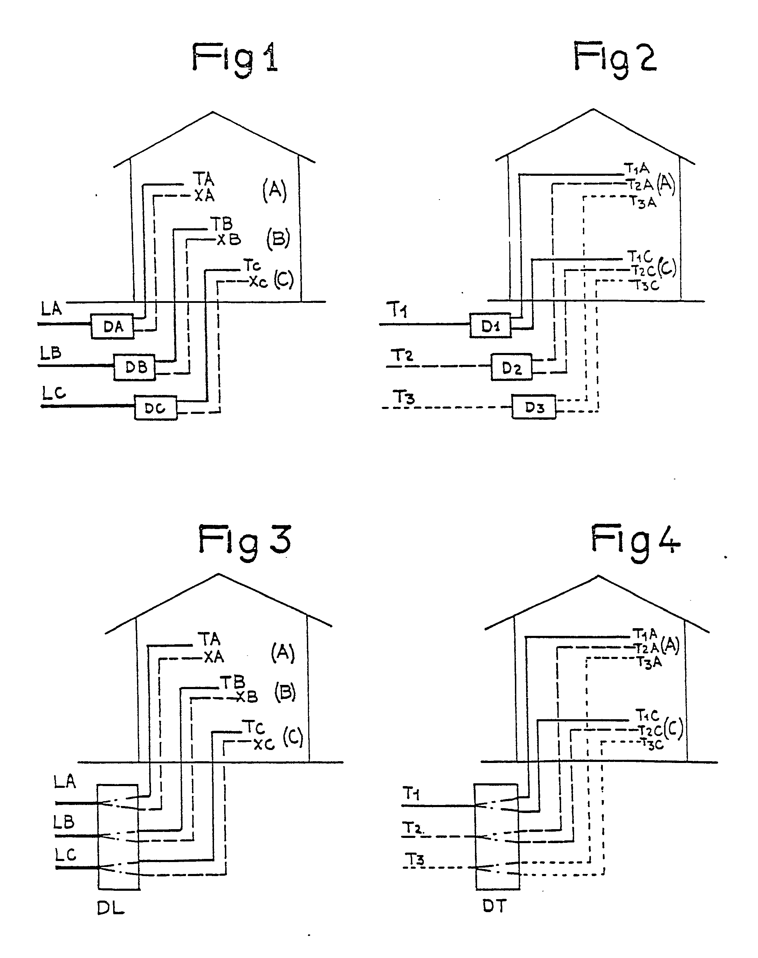

C'est ainsi que, comme représenté schématiquement à la figure 1, si les trois occupants A, B, C d'un immeuble sont chacun reliés à un central téléphonique par une ligne optique LA, LB, LC, on pourra aussi utiliser cette ligne pour les relier à un autre réseau, par exemple de télex, les signaux téléphoniques et de télex étant bien entendu portés par des lumières de longueurs d'onde différentes pour éviter les interférences pendant leur parcours commun dans la fibre. La ligne LA aboutira donc à un démultiplexeur DA qui permettra de séparer les signaux téléphoniques TA et les signaux de télex XA vers les décodeurs et récepteurs de l'abonné A ; il en sera de même pour les abonnés B et C de telle sorte qu'il faudra dans ce cas installer trois démultiplexeurs DA, DB et DC.

On connaît des appareils capables de réaliser de telles séparations de lumières, et par exemple ceux décrits par le brevet français FR-A-2 479 981 et ses deux additions FR-A-2 491 211 et FR-A-2 496 260, dans lesquels on associe un miroir concave et un réseau de diffraction, ou encore le brevet français FR-A-2 469 261 utilisant des miroirs sélectifs à couches diélectriques. Mais de tels composants sont d'un prix de revient relativement élevé, et leur multiplication dans des installations peut constituer un handicap économique au développement d'une telle technique.

On rencontre le même genre de problème dans le cas de réseaux de distribution optique câblée de programmes de télévision, comme représenté schématiquement à la figure 2, où les lignes $T_1$, $T_2$, $T_3$ porteuses chacune d'un programme doivent être distribuées à au moins deux abonnés A et C d'un même immeuble. Ici encore il faudra, en bout de chaque ligne $T_1$, $T_2$, $T_3$ prélever pour chaque abonné une partie du signal transmis, et il faudra installer trois composants distributeurs identiques.

On connaît aussi des composants capables de remplir cette fonction, et par exemple ceux décrits par le brevet français FR-A-2 505 056 utilisant des miroirs concaves, complets ou partiels, dont les centres sont légèrement décalés. Mais ici encore les miroirs qui doivent être d'une grande précision rendent relativement élevé le coût de tels composants.

La présente invention permet de réduire de façon notable le nombre de composants nécessaires à une installation, et par conséquent de réduire le coût global de l'installation.

L'invention s'applique donc à un composant optique du type comportant des fibres optiques en des positions relatives conjuguées objet-image pour séparer ou regrouper des lumières selon une fonction définie par la structure du composant. Selon la revendication 1 ou la revendication 2 le composant est destiné à démultiplexer ou respectivement à multiplexer des signaux optiques et pour cela il comporte simultanément plusieurs groupes de fibres conjuguées objet-image relativement à la même fonction, l'ensemble des groupes de fibres étant disposé dans la même zone de faibles aberrations.

Selon l'invention, les fibres optiques d'entrée et de sortie sont disposées en barrettes rectilignes de fibres juxtaposées, plusieurs barrettes pouvant elles-mêmes être juxtaposées entre elles.

L'invention sera mieux comprise en se référant à des applications particulières données à titre d'exemples et représentées par les dessins annexés.

Les figures 1 et 2, qui ont été évoquées plus haut, sont des rappels schématiques d'installations réalisées selon les techniques antérieures, respectivement pour le démultiplexage des informations multiples transmises par une ligne propre à un abonné, et pour la distribution simultanée à plusieurs abonnés d'informations portées par une ligne générale.

Les figures 3 et 4, respectivement homologues aux figures 1 et 2, mettent en évidence la réduction du nombre de composants d'extrémités résultant de la mise en œuvre de l'invention.

La figure 5 est un rappel de la structure d'un composant de démultiplexage de type connu.

La figure 6 montre, pour ce même composant, une répartition de fibres selon l'invention permettant de tripler sa capacité.

La figure 7 est un rappel de la structure d'un composant de répartition de type connu.

Les figures 8 et 9 montrent, pour ce même composant, deux répartitions de fibres selon l'invention permettant de tripler sa capacité. Selon la figure 8 les fibres sont juxtaposées en une seule barrette rectiligne ; selon la figure 9 les fibres sont réparties en carré.

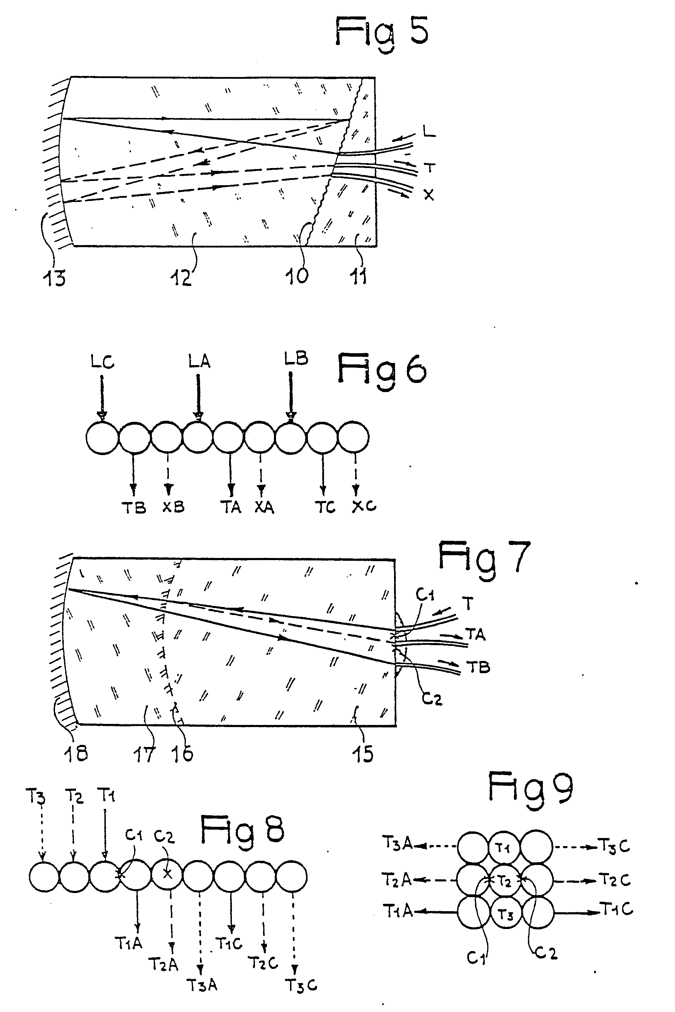

On se référera tout d'abord aux figures 3, 5 et 6 pour une application de l'invention au démultiplexage de deux signaux T et X portés par des lumières de longueurs d'onde différentes mélangées dans la fibre de transmission L, la même opération devant être effectuée pour les trois abonnés A, B et C. Le composant usuel représenté à la figure 5, et utilisé trois fois en DA, DB et DC sur le schéma de la figure 1 comporte, comme décrit plus en détail dans le brevet français FR-A-2 496 260, un réseau de diffraction par réflexion 10 formé sur un bloc 11 et collé à un bloc 12 dont l'autre extrémité forme un miroir concave sphérique ou parabolique 13. La fibre de transmission L traverse le bloc 11 et son extrémité vient, dans une zone réservée du réseau, au voisinage immédiat du foyer du miroir 13. Le faisceau émis par l'extrémité de la fibre L est réfléchi en un faisceau parallèle vers le réseau 10 qui le disperse en plusieurs faisceaux parallèles selon les longueurs d'onde qui sont eux-mêmes focalisés par le miroir 13 par exemple sur les extrémités des fibres T et X. Les caractéristiques et l'orientation du réseau 10 sont déterminées pour recueillir les longueurs d'onde recherchées au voisinage de l'axe principal du miroir 13, et les fibres d'entrée L et de sortie T et X sont regroupées au voisinage de cet axe où les aberrations sont minimales.

Selon l'invention on peut maintenant utiliser ce même composant pour traiter, par la même fonction de séparation, en même temps les trois fibres de transmission LA, LB et LC. Le composant unique DL (figure 3) sera le même que celui de la figure 5 mais comportera maintenant neuf fibres dont les extrémités seront noyées dans le bloc 11 (trois fibres d'entrée et six de sortie). La position relative des diverses fibres est donnée à la figure 6 où l'on voit que les neuf fibres sont alignées de façon jointive en une barrette rectiligne qui est disposée au voisinage immédiat du foyer du miroir 13 et perpendiculairement à la direction des traits du réseau 10. Cette disposition résulte de l'utilisation de fibres d'un diamètre extérieur de gaine de 0,125 mm, les longueurs d'onde des signaux X et T étant respectivement de 840 et 820 mm.

On voit qu'en utilisant le même composant, dans sa même fonction, pour trois groupes de fibres conjuguées objet-image on a pu économiser deux composants sans pratiquement augmenter le prix de revient du composant amélioré. On notera encore que la longueur totale de la barrette de neuf fibres n'est que de l'ordre de 1,1 mm, c'est-à-dire que l'on pourrait facilement, sans sortir de la zone où les aberrations restent acceptables, utiliser des barrettes encore plus longues, à environ vingt fibres, ce qui permet de multiplier encore les capacités d'un tel composant.

On aboutira à des résultats analogues dans une application de l'invention à la distribution simultanée d'informations à plusieurs destinataires comme on le verra en se référant maintenant aux figures 4, 7, 8 et 9. Le composant usuel représenté à la figure 7, et utilisé trois fois en $D_1$, $D_2$ et $D_3$ sur le schéma de la figure 2, permet de répartir partiellement sur TA et partiellement sur TB la lumière amenée par la fibre de transmission T. Comme décrit plus en détail dans le brevet français 82-19 284, le composant comporte un premier bloc 15 sur lequel est formé un miroir sphérique partiel 16 collé à un deuxième bloc 17 sur lequel est formé un deuxième miroir sphérique 18.

Les centres $C_1$ du miroir 16 et $C_2$ du miroir 18 sont situés dans le même plan que les extrémités des fibres T, TA et TB et légèrement décalés l'un par rapport à l'autre. Les rayons issus de l'extrémité de T qui rencontrent les zones réfléchissantes du miroir 16 forment l'image de T sur la fibre TA symétrique de T par rapport à $C_1$. Les rayons qui passent dans les zones transparentes de 16 forment une autre image de T sur la fibre TB symétrique de T par rapport à $C_2$.

Selon l'invention on peut maintenant utiliser ce même composant pour traiter, par la même fonction de distribution, en même temps les trois fibres de transmission $T_1$, $T_2$ et $T_3$. Le composant unique DT (figure 3) sera le même que celui de la figure 6, mais comportera maintenant neuf fibres (trois d'entrée et six de sortie). Une possibilité de positions relatives des fibres est donnée à la figure 8 où l'on utilise comme précédemment une barrette rectiligne de neuf fibres juxtaposées. Une autre possibilité de répartition de fibres est donnée à la figure 9 avec une disposition en carré.

Ici encore en utilisant le même composant, dans sa même fonction, pour trois groupes de fibres conjuguées objet-image, on économise deux composants sur trois, et l'économie peut encore être plus importante en utilisant un nombre accru de fibres.

C'est ainsi qu'elle s'applique dans les mêmes conditions à tous les composants optiques dans lesquels on utilise des fibres optiques en des positions relatives conjuguées objet-image pour regrouper ou séparer des lumières selon une fonction définie par la structure du composant. On pourra dans tous les cas utiliser simultanément plusieurs groupes de fibres conjuguées objet-image relativement à la même fonction, la seule limitation étant de ne pas dépasser, pour les extrémités de fibres, la zone où les aberrations restent à un niveau acceptable.

Tous les exemples décrits ci-dessus l'ont été dans des utilisations en vue de séparer des lumières, mais il est bien évident que les applications sont identiques lorsqu'il s'agit de regrouper une ou plusieurs lumières dans des fibres de transmission. Les composants à fonction partagée objet de l'invention peuvent aussi comporter à la fois des groupes de fibres utilisées dans le sens d'une séparation de lumières et des groupes en sens inverse pour regrouper des lumières.

## Revendications

1. Composant pour télécommunications optiques destiné à démultiplexer des signaux portés par des lumières de longueurs d'onde différentes comportant un ensemble de fibres (L, T, X) et une optique de focalisation et de séparation (13) à réseau de diffraction (10), caractérisé en ce qu'il comporte au moins deux fibres de transmission (LA, LB, LC) équidistantes, alignées et laissant entre elles un intervalle pour l'interposition de fibres de sortie, noyées dans un bloc (11) dont les extrémités sont situées dans le plan de focalisation de l'optique de focalisation (13) au voisinage de l'axe optique principal, tandis que ledit bloc (11) renferme aussi un ensemble de fibres (TA, TB, TC, XA, XB, XC) reliées aux récepteurs, la position géométrique de l'extrémité des fibres (TA, TB, TC, XA, XB, XC) reliées aux récepteurs dans ledit plan de focalisation étant telle que chaque fibre de transmission (LA, LB, LC) est conjuguée par l'optique de focalisation et de séparation (13) à réseau de diffraction (10) à un groupe d'au moins deux fibres (TB, XB, TA, XA, TC, XC) reliées aux récepteurs, l'ensemble des fibres optiques de transmission (LA, LB, LC) et des fibres optiques (TA, TB, TC, XA, XB, XC) liées aux récepteurs étant disposé sous forme d'au moins une barrette rectiligne (DL) de fibres perpendiculaires à la direction des traits du réseau (10) sur laquelle barrette (DL) au moins deux fibres (TA, XA) correspondent à la fibre de transmission (LA), au moins deux fibres (TB, XB) correspondent à la fibre de transmission (LB), au moins deux fibres (TC, XC) correspondent à la fibre de transmission (LC), l'un des ensembles de fibres (TA, XA) relié aux récepteurs étant situé entre les deux fibres de transmission (LA, LB), l'ensemble de fibres reliés aux récepteurs (TB, XB) étant situé à l'extérieur de l'espace séparant les deux fibres de transmission (LA, LB) et du côté de la fibre de transmission (LA), de même les fibres reliées aux récepteurs (TC, XC) sont situées à l'extérieur de l'intervalle des fibres de transmission (LB, LC) du côté de la fibre de transmission (LB).

2. Composant pour télécommunications optiques destiné à multiplexer des signaux portés par des lumières de longueurs d'onde différentes comportant un ensemble de fibres (L, T, X) et une optique de focalisation et de séparation (13) à réseau de diffraction (10), caractérisé en ce qu'il comporte au moins deux fibres de transmission (LA, LB, LC) équidistantes, alignées et laissant entre elles un intervalle pour l'interposition de fibres de sortie, noyées dans un bloc (11) dont les extrémités sont situées dans le plan de focalisation de l'optique de focalisation (13) au voisinage de l'axe optique principal, tandis que ledit bloc (11) renferme aussi un ensemble de fibres (TA, TB, TC, XA, XB, XC) reliées aux émetteurs, la position géométrique de l'extrémité des fibres (TA, TB, TC, XA, XB, XC) reliées aux émetteurs dans ledit plan de focalisation étant telle que chaque fibre de transmission (LA, LB, LC) est conjuguée par l'optique de focalisation et de séparation (13) à réseau de diffraction (10) à un groupe d'au moins deux fibres (TA, XA, TB, XB, TC, XC) reliées aux émetteurs, l'ensemble des fibres optiques de transmission (LA, LB, LC) et des fibres optiques (TA, TB, TC, XA, XB, XC), liées aux émetteurs étant disposé sous forme d'au moins une barrette rectiligne (DL) de fibres perpendiculaire à la direction des traits du réseau (10) sur laquelle barrette (DL) au moins deux fibres (TA, XA) correspondent à la fibre de transmission (LA), au moins deux fibres (TB, XB) correspondent à la fibre de transmission (LB), au moins deux fibres (TC, XC) correspondent à la fibre de transmission (LC), l'un des ensembles de fibres (TA, XA) reliés aux émetteurs étant situé entre les deux fibres de transmission (LA, LB), l'ensemble de fibres reliés aux émetteurs (TB, XB) étant situé à l'extérieur de l'espace séparant les deux fibres de transmission (LA, LB) et du côté de la fibre de transmission (LA), de même les fibres reliées aux émetteurs (TC, XC) sont situées à l'extérieur de l'intervalle des fibres de transmission (LB, LC) du côté de la fibre de transmission (LB).

**Claims**

1. Component for optical telecommunications, which is intended to demultiplex signals carried by light beams of differing wavelengths, comprising a set of fibres (L, T, X) and an optical focusing and separating system (13) having a diffraction grating (10), characterized in that it comprises at least two transmission fibres (LA, LB, LC) which are equidistant and aligned and which leave between them a gap for the interposition of exit fibres embedded in a block (11), the ends of which are situated in the focusing plane of the optical focusing system (13) in the vicinity of the principal optical axis, while the said block (11) also comprises a set of fibres (TA, TB, TC, XA, XB, XC) connected to the receivers, the geometric position of the end of the fibres (TA, TB, TC, XA, XB, XC) connected to the receivers in the said focusing plane being such that each transmission fibre (LA, LB, LC) is conjugated by the optical focusing and separating system (13) having a diffraction grating (10) with a group of at least two fibres (TB, XB, TA, XA, TC, XC) connected to the receivers, the set of the optical transmission fibres (LA, LB, LC) and of the optical fibres (TA, TB, TC, XA, XB, XC) connected to the receivers being disposed as at least one rectilinear strip (DL) of fibres perpendicular to the direction of the lines of the grating (10), on which strip (DL) at least two fibres (TA, XA) correspond to the transmission fibre (LA), at least two fibres (TB, XB) correspond to the transmission fibre (LB), at least two fibres (TC, XC) correspond to the transmission fibre (LC), one of the sets of fibres (TA, XA) connected to the receivers being situated between the two transmission fibres (LA, LB), the set of fibres connected to the receivers (TB, XB) being situated outside the space separating the two transmission fibres (LA, LB) and on the side of the transmission fibre (LA), and likewise the fibres connected to the receivers (TC, XC) are situated outside the gap of the transmission fibres (LB, LC) on the side of the transmission fibre (LB).

2. Component for optical telecommunications, which is intented to multiplex signals carried by light beams of differing wavelengths, comprising a set of fibres (L, T, X) and an optical focusing and separating system (13) having a diffraction grating (10), characterized in that it comprises at least two transmission fibres (LA, LB, LC) which are equidistant and aligned and which leave between them a gap for the interposition of exit fibres, embedded in a block (11), the ends of which are situated in the focusing plane of the optical focusing system (13) in the vicinity of the principal optical axis, while the said block (11) also comprises a set of fibres (TA, TB, TC, XA, XB, XC) connected to the emitters, the geometric position of the end of the fibres (TA, TB, TC, XA, XB, XC) connected to the emitters in the said focusing plane being such that each transmission fibre (LA, LB, LC) is conjugated by the optical focusing and separating system (13) having a diffraction grating (10) with a group of at least two fibres (TA, XA, TB, XB, TC, XC) connected to the emitters, the set of the optical transmission fibres (LA, LB, LC) and of the optical fibres (TA, TB, TC, XA, XB, XC) connected to the emitters being disposed as at least one rectilinear strip (DL) of fibres which is perpendicular to the direction of the lines of the grating (10), on which strip (DL) at least two fibres (TA, XA) correspond to the transmission fibre (LA), at least two fibres (TB, XB) correspond to the transmission fibre (LB), at least two fibres (TC, XC) correspond to the transmission fibre (LC), one of the sets of fibres (TA, XA) connected to the emitters being situated between the two transmission fibres (LA, LB), the set of fibres connected to the emitters (TB, XB) being situated outside the space separating the two transmission fibres (LA, LB) and on the side of the transmission fibre (LA), and likewise the fibres connected to the emitters (TC, XC) are situated outside the gap of the transmission fibres (LB, LC) on the side of the transmission fibre (LB).

## Patentansprüche

1. Bauteil für optische Telekommunikationsvorrichtungen zum Demultiplexen von Signalen, welche von Licht mit unterschiedlichen Wellenlängen getragen werden, mit einer Fasergruppe (L, T, X) und einer Fokussierungs- und Trennoptik (13) mit Beugungsgitter (10), dadurch gekennzeichnet, daß das Bauteil mindestens zwei abstandsgleiche, ausgerichtete Übertragungsfasern (LA, LB, LC) aufweist, zwischen denen sich ein Zwischenraum zum Einsetzen von Ausgangsfasern befinded und die in einem Block (11) eingebettet sind, dessen Enden in der Fokussierebene der Fokussieroptik (13) in der Nähe der optischen Hauptachse angeordnet sind, wobei der Block (11) ferner eine Gruppe von Fasern (TA, TB, TC, XA, XB, XC) umfaßt, die mit Empfängern verbunden sind, wobei die geometrische Position der mit den Empfängern verbundenen Enden der Fasern (TA, TB, TC, XA, XB, XC) in der Fokussierebene derart ist, daß jete Übertragungsfaser (LA, LB, LC) über die Fokussier- und Trennoptik (13) mit Beugungsgitter (10) mit einer Gruppe von mindestens zwei mit den Empfängern verbundenen Fasern (TB, XB, TA, XA, TC, XC) gekoppelt ist, wobei die Gruppe der optischen Übertragungsfasern (LA, LB, LC) und der mit den Empfängern verbundenen optischen Fasern (TA, TB, TC, XA, XB, XC) in Form mindestens eines rechteckigen Stabes (DL) von senkrecht zu den Linien des Gitters (10) verlaufenden Fasern angeordnet sind, wobei auf dem Stab (DL) mindestens zwei Fasern (TA, XA) der Übertragungsfaser (LA) entsprechen, mindestens zwei Fasern (TB, XB) der Übertragungsfaser (LB) entsprechen und mindestens zwei Fasern (TC, XC) der Übertragungsfaser (LC) entsprechen, wobei eine der mit den Empfängern verbundenen Gruppen von Fasern (TA, XA) zwischen den beiden Übertragungsfasern (LA, LB) angeordnet ist, die mit den Empfängern verbundene Gruppe von Fasern (TB, XB) auf der Außenseite des die beiden Übertragungsfasern (LA, LB) trennenden Zwischenraumes und auf der Seite der Übertragungsfaser (LA) angeordnet ist und die mit den Empfängern verbundenen Fasern (TC, XC) gleichermaßen auf der Außenseite des Zwischenraumes zwischen den Übertragungsfasern (LB, LC) auf der Seite der Übertragungsfaser (LB) angeordnet sind.

2. Bauteil für optische Telekommunikationsvorrichtungen zum Multiplexen von Signalen, welche von Licht mit unterschieldlichen Wellenlängen, getragen werden, mit einer Gruppe von Fasern (L, T, X) und einer Fokussierungs- und Trennoptik (13) mit Beugungsgitter (10), dadurch gekennzeichnet, daß das Bauteil mindestens zwei abstandsgleiche, ausgerichtete Übertragungsfasern (LA, LB, LC) aufweist, zwischen denen sich ein Zwischenraum zum Einsetzen von Ausgangsfasern befindet und die in einem Block (11) eingebettet sind, dessen Enden in der Fokussierebene der Fokussieroptik (13) in der Nähe der optischen Hauptachse angeordnet sind, wobei der Block (11) ferner eine Gruppe von Fasern (TA, TB, TC, XA, XB, XC) umfaßt, die mit Sendern verbunden sind, wobei die geometrische Position der mit den Sendern verbundenen Enden der Fasern (TA, TB, TC, XA, XB, XC) in der Fokussierebene derart ist, daß jede Übertragungsfaser (LA, LB, LC) über die Fokussier- und Trennoptik (13) mit Beugungsgitter (10) mit einer Gruppe von mindestens zwei mit den Sendern verbundenen Fasern TA, XA, TB, XB, TC, XC) gekoppelt ist, wobei die Gruppe der optischen Übertragungsfasern (LA, LB, LC) und der mit den Sendern verbundenen optischen Fasern (TA, TB, TC, XA, XB, XC) in Form mindestens eines rechteckigen Stabes (DL) von senkrecht zu den Linien des Gitters (10) verlaufenden Fasern angeordnet sind, wobei auf dem Stab (DL) mindestens zwei Fasern (TA, XA) der Übertragungsfaser (LA) entsprechen, mindestens zwei Fasern (TB, XB) der Übertragungsfaser (LB) entsprechen und mindestens zwei Fasern (TC, XC) der Übertragungsfaser (LC) entsprechen, wobei eine der mit den Sendern verbundenen Gruppen von Fasern (TA, XA) zwischen den beiden Übertragungsfasern (LA, LB) angeordnet ist, die mit den Sendern verbundene Gruppe von Fasern (TB, XB) auf der Außenseite des die beiden Übertragungsfasern (LA, LB) trennenden Zwischenraumes und auf der Seite der Übertragungsfaser (IA) angeordnet ist und die mit den Sendern verbundenen Fasern (TC, XC) gleichermaßen auf der Außenseite des Zwischenraumes zwischen den Übertragungsfasern (LB, LC) auf der Seite der Übertragungsfaser (LB) angeordnet sind.

Fig 1

Fig 2

Fig 3

Fig 4

## Fig 5

## Fig 6

## Fig 7

## Fig 8

## Fig 9